# EUROPÄISCHE PATENTSCHRIFT

(11) **EP 2 017 856 B1**
(45) Veröffentlichungstag und Bekanntmachung des Hinweises auf die Patenterteilung: **03.09.2014**
(21) Anmeldenummer: 07290891.6
(22) Anmeldetag: 17.07.2007
(51) Int. Cl.: H01B 12/16, H01B 12/08

(54) **Supraleitfähiges elektrisches Kabel**
Supra-conductible electric cable
Câble électrique résistant à une forte conduction

(43) Veröffentlichungstag der Anmeldung: 21.01.2009
(73) Patentinhaber: Nexans, 75008 Paris (FR)
(72) Erfinder: Allais, Arnaud, Dr., 22940 Saint Julien (FR); Schmidt, Frank, 30855 Langenhagen (DE)
(74) Vertreter: Döring, Roger

(56) Entgegenhaltungen:
- EP-A- 0 607 079
- JP-A- 6 139 839
- JP-A- 63 241 807
- US-A- 3 829 964
- US-A1- 2005 056 456

## Beschreibung

Die Erfindung bezieht sich auf ein supraleitfähiges elektrisches Kabel gemäß dem Oberbegriff des Patentanspruchs 1.

Ein supraleitfähiges Kabel hat mindestens einen elektrischen Leiter aus einem speziellen Material, das bei ausreichend tiefen Temperaturen in den supraleitfähigen Zustand übergeht. Der elektrische Widerstand eines entsprechend aufgebauten Leiters geht dadurch gegen Null. Geeignete Materialien sind beispielsweise YBCO (Yttrium-Barium-Kupfer-Oxid) oder BiSCCO (Wismut-Strontium-Kalzium-Kupfer-Oxid). Ausreichend niedrige Temperaturen für ein derartiges Material liegen beispielsweise zwischen 4 K und 110 K, um den supraleitfähigen Zustand zu erreichen. Geeignete Kühlmittel sind beispielsweise Stickstoff, Helium, Neon und Wasserstoff oder Gemische dieser Stoffe, jeweils in gasförmigem oder flüssigem Zustand. Es sind supraleitfähige Kabel mit kaltem Dielektrikum und mit warmem Dielektrikum bekannt.

Bei einem supraleitfähigen Kabel mit kaltem Dielektrikum ist der Leiter von einem aus Schichten aus Isoliermaterial bestehenden Dielektrikum umgeben, bei dem ein flüssiges Kühlmedium als Imprägniermittel im Dielektrikum vorhanden ist. Ein solches Kabel zeichnet sich dadurch aus, daß sehr hohe Leistungen im Hochspannungsbereich übertragen werden können. Es besteht beispielsweise aus dem Leiter als Innenleiter und einem konzentrisch dazu angeordneten Schirm bzw. Rückleiter, die durch das Dielektrikum (Isolierung) voneinander getrennt und auf Abstand gehalten sind. Die supraleitfähigen Einzelelemente eines solchen Kabels bestehen beispielsweise aus Bändern mit supraleitfähigem Material, wie YBCO oder BiSCCO, die dicht nebeneinander liegend in gegeneinander isolierten, konzentrischen Lagen mit langem Schlag um einen Träger herumgewickelt sind (EP 0 830 694 B1). Ein entsprechendes Kabel ist von einem das Kühlmittel führenden Kryostat umgeben, der aus zwei konzentrischen, durch eine Vakuumisolierung gegeneinander isolierten, metallischen Rohren besteht. Ein Beispiel dafür ist aus US 2005/056456 bekannt.

Supraleitfähige Kabel mit warmem Dielektrikum haben einen Leiter, der direkt in einem derartigen, das Kühlmittel führenden Kryostat angeordnet ist. Dielektrikum und Schirm bzw. Rückleiter sind hier über dem Kryostat angebracht. Auch bei einem solchen Kabel besteht der Leiter aus gegeneinander isolierten, konzentrischen Lagen von dicht liegenden Bändern mit supraleitfähigem Material.

Aus der US-A-3 829 964 ist ein supraleitender Leiter bekannt, der aus mindestens einem supraleitenden Verbund besteht, in dem eine Anzahl von Drähten aus einer supraleitenden Legierung mit Abstand zueinander in einer Kupfermatrix eingebettet ist. Dieser Verbund wird nach seiner Fertigstellung um seine Längsachse gedreht, so daß die Drähte einen wendelförmigen Verlauf erhalten. In einem übergeordneten Verbundleiter sind segmentartige Teile zusammengefügt, die jeweils entsprechend dem geschilderten Verbund aufgebaut sind.

Die EP-A-0 607 079 beschreibt einen elektrischen Leiter für variablen Strom, bei dem es sich auch um einen supraleitfähigen Leiter handeln kann. Der Leiter besteht aus einer Vielzahl von Verseilelementen, die in mehreren Stufen miteinander verseilt sind. Dazu werden Drähte eingesetzt, die aus einer großen Anzahl von Fäden bestehen, welche in eine Kupfer-Nickel-Matrix eingebettet sind. Sechs solche Drähte werden miteinander zu einer ersten Stufe verseilt. Sechs erste Stufen werden danach zu einer zweiten Stufe miteinander verseilt und sechs zweite Stufen werden abschließend zu einer dritten Stufe mit 216 Drähten miteinander verseilt. In allen Stufen ist jeweils ein zusätzliches zentrales Verseilelement vorhanden.

Dieser Aufbau des Leiters gilt auch für das bekannte supraleitfähige Wechselstromkabel nach der eingangs erwähnten DE 197 19 738 B4. Der Leiter dieses Kabels besteht aus kreisrunden Drähten aus oxidischen, supraleitfähigen Materialien. Die Drähte sind in mehreren konzentrischen Lagen um ein Rohr herum angeordnet. Die Lagen sind gegeneinander isoliert. Die isolierenden Zwischenschichten zwischen den einzelnen Lagen der Drähte sollen die Stromverteilung im Leiter verbessern. Sie bedeuten jedoch einen zusätzlichen Aufwand an Material und bei der Herstellung des Leiters. Außerdem hat der Leiter dadurch einen relativ großen Durchmesser, der auch zu größeren Abmessungen des Kabels insgesamt führt.

Der Erfindung liegt die Aufgabe zugrunde, das eingangs geschilderte supraleitfähige Kabel so zu gestalten, daß es bei vereinfachtem Aufbau mit kleineren Abmessungen einfacher hergestellt werden kann.

Diese Aufgabe wird entsprechend den kennzeichnenden Merkmalen des Patentanspruchs 1 gelöst.

Der Leiter dieses Kabels kann in einer für Hochspannungskabel bzw. Starkstromkabel üblichen Technik mit herkömmlichen Maschinen hergestellt werden. Es wird für den Leiter kein zentrales Kernelement benötigt. Ein solcher Leiter ist geometrisch sehr einfach aufgebaut und er hat einen entsprechend kleinen Durchmesser. Der Leiter garantiert bei Einhaltung bestimmter Schlaglängen der Verseilung in dem angegebenen Bereich außerdem auch ohne den Einsatz von isolierenden Zwischenschichten eine gute Stromverteilung mit entsprechend niedrigen Wechselstromverlusten und einer günstigen Ausnutzung des supraleitfähigen Materials. Der Leiter kann für supraleitfähige Kabel mit kaltem oder warmem Dielektrikum eingesetzt werden, mit den über dem Leiter liegenden grundsätzlich bekannten Aufbauten. Dabei kann ein Schirm bzw. Rückleiter ebenfalls mit solchen Drähten aufgebaut werden, wie sie für den Leiter eingesetzt werden. Auch hier können dann herkömmliche Maschinen und Fertigungstechniken verwendet werden. Durch den sektorförmigen Aufbau des Leiters und die dünnen Isolierschichten zwischen den Sektoren werden die Stromverteilung weiter verbessert und die Wechselstromverluste weiter vermindert.

Ausführungsbeispiele des Erfindungsgegenstandes sind in den Zeichnungen dargestellt.

Es zeigen:
Fig. 1 und 2 Querschnitte eines in einem Kabel nach der Erfindung verwendbaren Leiters in zwei unterschiedlichen Ausführungsformen.
Fig. 3 eine Seitenansicht des Leiters nach Fig. 1 in stark schematischer Darstellung.
Fig. 4 und 5 Querschnitte von zwei unterschiedlich aufgebauten Kabeln mit einem Leiter nach Fig. 1.

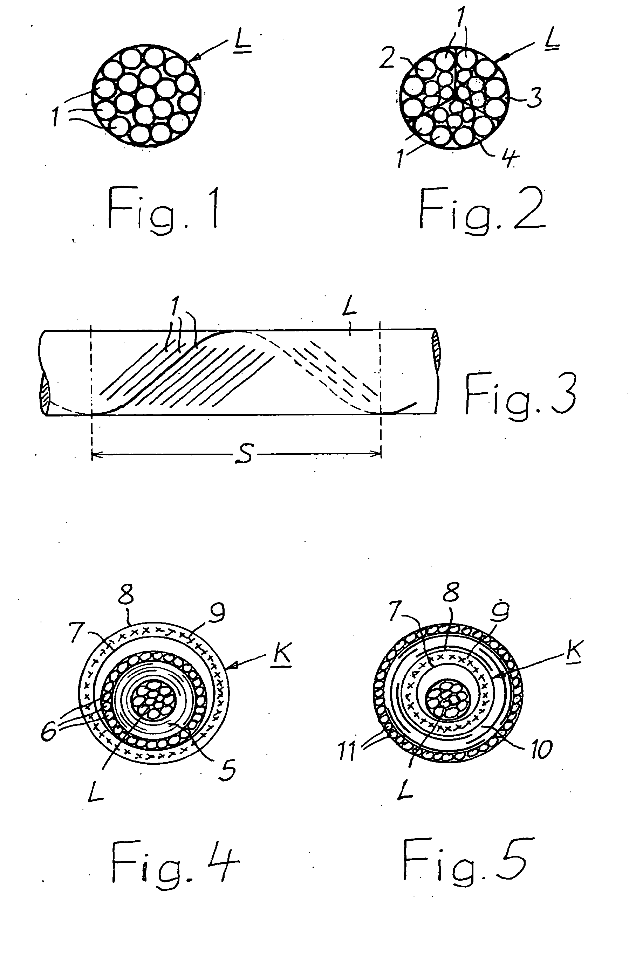

In Fig. 1 ist ein Querschnitt eines als Leiterseil ausgebildeten elektrischen Leiters L dargestellt, der aus einer Vielzahl von miteinander verseilten, supraleitfähigen Drähten 1 besteht. Die Drähte 1 können entsprechend der zeichnerischen Darstellung einen kreisrunden, aber auch einen polygonalen Querschnitt haben. Sie sind gemäß Fig. 3 mit vorgegebener Schlaglänge S miteinander verseilt, die zwischen zwei auf den Durchmesser D des Leiters L bezogenen Grenzwerten liegt. Diese Grenzwerte sind mit etwa 5 x D als unterem Grenzwert und etwa 20 x D als oberem Grenzwert definiert. Ein solcher Leiter L läßt sich - wie bereits erwähnt - mit in der Kabeltechnik üblichen Maschinen und Fertigungstechniken herstellen.

Der Leiter L ist gemäß Fig. 2 aus beispielsweise drei Sektoren 2, 3 und 4 aufgebaut, in denen die supraleitfähigen Drähte 1 jeweils mit der angegebenen Schlaglänge S miteinander verseilt sind. Die Sektoren 2, 3 und 4 sind durch dünne Isolierschichten voneinander getrennt, die beispielsweise aus Rußpapier bestehen. Sie sind ebenfalls miteinander verseilt. Dieser Aufbau des Leiters L führt zu einer weiteren Verbesserung der Stromverteilung und einer weiteren Verminderung der Wechselstromverluste. Der Leiter L kann auch aus mehr als drei Sektoren aufgebaut sein. Er kann auch aus nur zwei Sektoren bestehen.

Die Drähte 1 können zusätzlich auch mit einer sehr dünnen, im µm-Bereich liegenden Lackschicht überzogen sein. Mit einem aus solchen Drähten aufgebauten Leiter L lassen sich die Stromverteilung weiter verbessern und die Wechselstromverluste weiter vermindern.

Mit Vorteil weisen die Drähte 1 YBCO als supraleitfähiges Material auf. Ein entsprechender Draht hat beispielsweise einen langgestreckten metallischen Träger mit kreisrundem oder polygonalem Querschnitt, um den herum eine Schicht aus einem texturierten metallischen Substrat als Unterlage für eine YBCO-Schicht herumgeformt ist. Ein Draht 1 mit einer YBCO-Schicht wird beispielsweise wie folgt hergestellt:

Ein als Band vorliegendes, durch Vorbehandlung bereits texturiertes metallisches Substrat wird längseinlaufend zu einem Schlitzrohr um den Träger herumgeformt. Das Band bzw. das Substrat besteht beispielsweise aus Nickel, Kupfer oder Eisen oder einer Legierung. Es hat in einer Vorbehandlungsstufe beispielsweise eine biaxiale Textur eingeprägt bekommen. Die sich in Längsrichtung erstreckenden Kanten dieses Schlitzrohrs werden dann in einer Schweißeinrichtung verschweißt, so daß sich ein durch eine Schweißnaht geschlossenes Rohr ergibt. Das geschlossene Rohr wird danach in einer Zieheinrichtung soweit in seinen Abmessungen reduziert, bis es am Träger anliegt. Das so erzeugte Element wird anschließend rundum mit einer Schicht aus YBCO-Material versehen. Gegebenenfalls kann vorher noch eine Schicht aus keramischem Material, wie beispielsweise Lanthanzirkonat, auf das Rohr aufgebracht werden, und zwar vor oder nach dem Herunterziehen desselben. Entsprechende Beschichtungsverfahren sind bekannt. Der mit supraleitfähigem YBCO-Material beschichtete Draht 1 wird abschließend zum Erreichen der Supraleitfähigkeit einer Wärmebehandlung unterzogen. Er wird dabei vorzugsweise bei Temperaturen von 700 °C bis 850 °C geglüht.

Ein Kabel mit einem Leiter L nach Fig. 1 oder Fig. 2 kann gemäß Fig. 4 beispielsweise als einphasiges, supraleitfähiges Kabel mit kaltem Dielektrikum ausgeführt sein. Über dem Leiter L liegt ein beispielsweise aus mehreren Lagen aus Papier oder einem anderen geeigneten Isolierstoff bestehendes Dielektrikum 5. Leiter L und Dielektrikum 5 bilden zusammen eine Ader des Kabels. Diese Ader ist von einem Schirm bzw. Rückleiter 6 umschlossen. Dieser besteht aus mindestens einer Lage von elektrisch gut leitenden Drähten, die auch supraleitfähig und ebenso wie die Drähte 1 aufgebaut sein können. Das so bestückte Kabel ist von einem Kryostat K umschlossen, der aus zwei konzentrischen metallischen Rohren 7 und 8 besteht, die durch einen Ringraum 9 voneinander getrennt sind, in dem sich eine Vakuumisolierung befindet. Durch den Kryostat K wird zur Kühlung des supraleitfähigen Kabels ein Kühlmittel geleitet, welches als Imprägniermittel auch in das Dielektrikum 5 eindringt. In dem Kryostat K können auch drei aus Leiter L und Dielektrikum 5 bestehende Adern angeordnet sein, welche die drei Phasen eines supraleitfähigen Kabels für ein Drehstromsystem darstellen.

Der Leiter L kann gemäß Fig. 5 auch direkt in dem Kryostat K angeordnet werden, für dessen Aufbau das gleiche gilt wie für den Kryostat K gemäß Fig. 4. Über dem Kryostat K liegen bei dieser Ausführungsform des Kabels ein Dielektrikum 10 und ein Schirm bzw. Rückleiter 11. Dessen Aufbau kann dem des Schirms bzw. Rückleiters 6 nach Fig. 4 entsprechen.

## Patentansprüche

1. Supraleitfähiges elektrisches Kabel, das einen aus supraleitfähigen Drähten (1) bestehenden Leiter (L) aufweist, welcher von einem aus zwei konzentrischen Rohren (7,8), zwischen denen sich eine Vakuumisolierung (9) befindet, bestehenden Kryostat (K) umgeben ist, durch welchen zur Kühlung des Kabels ein Kühlmittel geleitet wird, **dadurch gekennzeichnet,**
- **daß** der Leiter (L) als Leiterseil aufgebaut ist, in dem die Drähte (1) mit vorgegebener, zwischen etwa 5 x D und etwa 20 x D liegender Schlaglänge (S) miteinander verseilt sind, mit dem Durchmesser D des Leiterseils, und
- **daß** der Leiter (L) in Sektoren (2,3,4) unterteilt ist, welche durch dünne Isolierschichten voneinander getrennt sind.

2. Kabel nach Anspruch 1, **dadurch gekennzeichnet, daß** der Leiter (L) von einem Dielektrikum (5) umgeben ist, über dem ein aus supraleitfähigen Drähten bestehender Schirm bzw. Rückleiter (6) angebracht ist.

3. Kabel nach Anspruch 1 oder 2, **dadurch gekennzeichnet, daß** die Drähte (1) einen kreisförmigen Querschnitt haben.

4. Kabel nach Anspruch 1 oder 2, **dadurch gekennzeichnet, daß** die Drähte (1) einen polygonalen Querschnitt haben.

5. Kabel nach einem der Ansprüche 1 bis 4, **dadurch gekennzeichnet, daß** die Drähte (1) mit einer dünnen Lackschicht überzogen sind.

## Claims

1. A superconductive electrical cable, which comprises a conductor (L) consisting of superconductive wires (1), which is surrounded by a cryostat (K) for guiding a cooling medium for cooling the cable, and which consists of two concentric metal tubes (7,8) between which a vacuum insulation (9) is provided, **characterized in**
- that the conductor (L) is a stranded conductor in which the wires (1) are stranded with each other with a predetermined length of lay (S), having a value between about 5 x D and about 20 x D, where D is the diameter of the stranded conductor, and
- that the conductor (L) is subdivided intro sectors (2,3,4), which are separated from each other by thin insulating layers.

2. Cable according to claim 1, **characterized in that** the conductor (L) is enclosed by a dielectric (5), over which a screen or return conductor (6) consisting of superconductive wires is applied.

3. Cable according to claim 1 or 2, **characterized in that** the wires (1) have a circular cross section.

4. Cable according to claim 1 or 2, **characterized in that** the wires (1) have a polygonal cross section.

5. Cable according to one of the claims 1 to 4, **characterized in that** the wires (1) are coated with a thin lacquer layer.

## Revendications

1. Câble électrique supraconducteur, qui présente un conducteur (L) constitué de fils supraconducteurs (1), lequel est entouré par un cryostat (K) constitué de deux tubes concentriques (7, 8), entre lesquels se trouve une isolation sous vide (9), à travers lequel cryostat est guidé un réfrigérant pour refroidir le câble,
**caractérisé en ce**
- **que** le conducteur (L) est construit sous forme de ligne conductrice dans laquelle les fils (1) sont tordus ensemble à une longueur de pas (S) prédéfinie, comprise entre environ 5 x D et environ 20 x D, D étant le diamètre de la ligne conductrice,
et
- **que** le conducteur (L) est divisé en secteurs (2, 3, 4) qui sont séparés les uns des autres par de minces couches isolantes.

2. Câble selon la revendication 1, **caractérisé en ce que** le conducteur (L) est entouré par un diélectrique (5) sur lequel est appliqué un conducteur de retour (6) ou un blindage constitué de fils supraconducteurs.

3. Câble selon la revendication 1 ou 2, **caractérisé en ce que** les fils (1) ont une section transversale circulaire.

4. Câble selon la revendication 1 ou 2, **caractérisé en ce que** les fils (1) ont une section transversale polygonale.

5. Câble selon l'une quelconque des revendications 1 à 4, **caractérisé en ce que** les fils (1) sont revêtus d'une couche de vernis mince.
